# EUROPÄISCHE PATENTANMELDUNG

(11) **EP 2 672 198 A1**
(43) Veröffentlichungstag der Anmeldung: **11.12.2013**
(21) Anmeldenummer: 13170601.2
(22) Anmeldetag: 05.06.2013
(51) Int. Cl.: F24J 2/52, H01L 31/042, F24J 2/04

(54) **Solarmodulhalterung zur Montage von PV-Modulen als Indachmodule**

(30) Priorität: 06.06.2012 DE 202012102087 U
(71) Anmelder: Folta, Maren, 06279 Farnstädt (DE)
(72) Erfinder: Folta, Enrico, 06279 Farnstädt (DE)
(74) Vertreter: Gulde Hengelhaupt Ziebig & Schneider

(57) **Zusammenfassung**

Die Erfindung betrifft eine Solarmodulhalterung (1) zur Montage von Solarmodulen (2, 9, 11) als Indachmodule, bestehend aus form- und kraftschlüssig miteinander verbundenen Metallprofilen, die, dem Rastermaß von Solarmodulen (2, 9, 11) folgend, festgefügte Rechteckrahmen (5) bilden,

Es ist vorgesehen, dass die Rechteckrahmen (5) an ihrer jeweiligen Langseite aus einem Kastenhohlprofil mit mehreren Profilierungen in U-Form an ihrer Kopfseite und zumindest einer Profilierung in Winkelform an ihrer Fußseite und an ihrer jeweiligen Kurzseite aus einem Metallprofil bestehen, das an seiner Fußseite entweder ein Kastenhohlprofil oder ein nach außen gerichtetes Winkelprofil und an seiner Kopfseite eine Profilierung entweder in U-Form oder in doppelt abgewinkelter L-Form aufweist.

## Beschreibung

Die Erfindung betrifft eine Solarmodulhalterung zur Montage von PV (Photovoltaik-)-Modulen als Indachmodule. Dabei geht die Fläche der montierten und zusammengehaltenen PV-Module in eine sie umgebende Dachfläche übergangslos über.

Die überwiegende Anzahl der auf Dächern montierten Solarmodule sind nachträglich oder bewusst als Aufdachsysteme angebracht. Damit ergab sich, neben dem Vorteil einer günstigen Wärmeabführung durch eine objektiv einsetzende Hinterlüftung, auch ein nicht unwesentlicher Nachteil, der darin besteht, dass Windböen zwischen Dachhaut und den Rückseiten von Solarmodulen Kräfte entwickeln, die beträchtlich auf die Verschraubungen von Aufnahmevorrichtungen im Dachgebälk einwirken. Außerdem stören Aufdachsysteme die Optik.

Dadurch sind die Anwender der Solartechnik zunehmend daran interessiert, bereits während der Dacheindeckung eines Gebäudes Voraussetzungen dafür zu schaffen, dass möglichst geringe oder keine Überstände von montierten Solarmodulen über der Dachhaut zugelassen werden.

Aus dem Stand der Technik sind bereits Lösungen bekannt, die mit mehr oder weniger großem Aufwand einer derartigen Forderung nachkommen sollen.

Nachfolgend soll daher auf einige beispielhaft näher eingegangen werden.

Nach EP 0 599 497 A1 ist ein Dachsystem, welches aus Solarzellen besteht, bekannt. Dabei tragen in Rahmenbauweise gefertigte Aufnahmen eine definierte Anzahl von Solarzellen, wodurch ein Rastermaß für montierbare Platten, die jeweils ein Solarmodul bilden, entsteht. Die montierbaren Platten bilden, am Dachfirst beginnend, die Dachhaut nach und können bis zur Traufe verlegt werden. Sie liegen dabei auf den Dachsparren auf und sie sind seitlich an ihren vertikalen Längsseiten durch überlappende Profile gegeneinander abgedichtet. Vom Dachfirst bis gegebenenfalls zur Traufe sind die montierbaren Platten dachziegelartig überlappend verlegt. Die vorgestellte Rahmenbauweise erscheint sehr materialintensiv, wobei die Hinterlüftung der Solarmodule nicht erkennbar gelöst ist.

Mit EP 0 436 572 B1 wird eine Solarbedachungsanordnung gezeigt. Hierbei sind Dachziegel mit Solarzellen fest verbunden und es befindet sich mit den Dachziegeln eine wasserdichte Dachmembran in unmittelbarer Wirkbeziehung. Dadurch werden etwaige Leckagen in das Dach hinein vermieden. Die mit Solarzellen bestückten Dachziegel bilden auf der Oberseite der auch als Bedachungsfolie bezeichneten wasserdichten Dachmembran, aufliegend auf Isolationsblöcken, ein entsprechend großes Solarmodul beziehungsweise eine Fläche mehrerer Solarmodule. Dadurch kann ein entsprechend modifizierter Dachziegel als ein Zweischicht- oder als ein Dreischichtblock vorliegen.

In EP 1 056 138 A2 sind Solarzellen auf einem Solarzellen tragenden Dach angeordnet, die zusammen ein Energieerzeugungssystem bilden. Die Solarzellen befinden sich dabei jeweils zwischen zwei plattenförmigen Elementen, wobei in definiertem Abstand zur Rückseite der durch die plattenförmigen Elemente eingefassten Solarzellen stets eine poröse, feste und nicht brennbare Platte angeordnet ist.

Eine derartige Struktur einer Solarzelle ist durch Rahmenglieder eingefasst, die die Solarzellen in definiertem Abstand zu einer Montageebene halten. Die Rahmenglieder sind fest mit der Montageebene verbunden.

Schließlich sei auf ein integriertes Solarzellendachsystem und ein Verfahren zu seiner Herstellung gemäß WO 2006/098974 A1 hingewiesen. Hier befinden sich die Solarzellen in streifenförmiger Anordnung auf einem wasserdichten, flexiblen Untergrund, welcher noch mit einem Substrat beschichtet ist und es werden die Solarzellen zu Solarzellengruppen zusammengefasst. Die Solarzellengruppen sind zumindest an einer ihrer Auflagen dachziegelartig übereinandergelegt. Bei dieser Lösung entfallen zwar die die Solarzellen einfassenden Rahmenglieder; es bedarf jedoch aus diesem Grunde einer möglichst stabilen Unterlage zur Befestigung der Solarzellen.

Der vorliegende Stand der Technik zeigt in der zitierten kleinen Auswahl, dass für den Einbau von Solarzellenmodulen in die Ebene eines Hart- oder eines Weichdaches Lösungen mit unterschiedlichem Aufwand angeboten werden. Meist überwiegen rahmengestützte Aufbauten, auf welchen die einzelnen Solarzellen formschlüssig gehalten sind. Neben der Berücksichtigung von statischen Fragen zur Gestaltung einer durch Solarzellen gebildeten Dachhaut muss demnach vorgesehen werden, dass der Aufwand für die Befestigung der Solarzellen in Rahmenbauteilen bezüglich des Materialeinsatzes und des Montageaufwandes klein gehalten wird.

Es ist daher Aufgabe der Erfindung eine Lösung zur Solarmodulhalterung in der Ausführung als Indachmodul anzubieten, bei der die Solarzellen auf vorgefertigten Rahmenkonstruktionen aufliegen und die Rahmenkonstruktionen miteinander formschlüssig und wasserdicht kombinierbar sind, wobei sie gleichzeitig unter den aufgelegten Solarzellen hinterlüftbar bleiben und die Solarzellen mittels, während der Montage aufsetzbaren Randausbildungen auf die Rahmenkonstruktionen, formschlüssig und abdichtend auf diesen fixiert werden können.

Die Aufgabe der Erfindung wird wie folgt gelöst, wobei hinsichtlich der grundlegenden erfinderischen Gedanken auf den Schutzanspruch 1 verwiesen wird.

Die weitere Ausgestaltung der Erfindung erfolgt gemäß der Darlegung in den Ansprüchen 2 bis 9.

Die Erfindung geht aus von einer Solarmodulhalterung zur Montage von Solarmodulen als Indachmodule, bestehend aus form- und kraftschlüssig miteinander verbundenen Metallprofilen, die, dem Rastermaß von Solarmodulen folgend, festgefügte Rechteckrahmen bilden, wobei die Rechteckrahmen an ihrer jeweiligen Langseite aus einem Kastenhohlprofil mit mehreren Profilierungen in U-Form an ihrer Kopfseite und zumindest einer Profilierung in Winkelform an ihrer Fußseite und an ihrer jeweiligen Kurzseite aus einem Metallprofil bestehen, das an seiner Fußseite entweder ein Kastenhohlprofil oder ein nach außen gerichtetes Winkelprofil und an seiner Kopfseite eine Profilierung entweder in U-Form oder in doppelt abgewinkelter L-Form aufweist.

Das hat den Vorteil, dass die Rechteckrahmen, die jeweils ein Solarmodul tragen, über ihre Ausbildungen an den Langseiten und Kurzseiten und dort im Bereich einer jeweiligen Kopf- und Fußseite eines Metallprofils variabel verbindbar sind und möglichst wenige lose Verbindungselemente zum Einsatz kommen. Durch die mögliche Vorfertigung der Rechteckrahmen und der vorgenannten Variabilität ihres Auslegens auf das Gebälk eines vorhandenen Daches ist die Solarmodulmontage vollkommen unkompliziert und qualitätsgerecht schnell durchführbar.

In einer Ausbildung zur Montageerleichterung der Solarmodulhalterung in Form speziell gestalteter Rechteckrahmen wird vorgesehen, dass mindestens ein Kastenhohlprofil, das sich an der Langseite eines Rechteckrahmens befindet und, dort an dessen Kopfseite, eine nach außen gerichtete Auskragung in Winkelform aufweist, wobei auf einem vertikal nach oben gerichteten Steg der Auskragung ein Halbrundprofil angebracht ist.

Dadurch ist es vorteilhaft möglich, mittels Formschluss bewirkender Abdeckelemente, die eine Klemmwirkung erzielen, die Solarmodulhalterungen zu fixieren und das Eindringen von Nässe zu verhindern.

Weiterhin ist eine erfindungsgemäße Solarmodulhalterung derart ausgestaltet, indem die Kastenhohlprofile für die Langseiten des Rechteckrahmens an ihrer Kopfseite zwei unterschiedlich breite und hohe Profilierungen in Doppel-U-Profilierung, die um 90° versetzt zueinander angeordnet sind, aufweisen.

Eine solche gegensätzliche U-Profilierung erledigt vorteilhafterweise zwei notwendige Effekte, nämlich einen zum Einschieben eines Solarmoduls in die weiteren U-Profilierungen und einen anderen zum Einlegen des Abdeckelementes zwischen zwei benachbart angeordnete Solarmodulhalterungen, die dadurch nicht nur fixiert sondern zusätzlich auch in definierter Distanz zueinander ausgelegt werden können.

Eine große Erleichterung der Montage von Indachmodulen stellt die Vorfertigung der Rechteckrahmen für die Solarmodulhalterungen dar. Sie kommt darin zum Ausdruck, indem die Metallprofile für einen Rechteckrahmen über versenkbare Schraubverbindungen in der Nähe der Enden der Metallprofile, die die Kurzseiten des Rechteckrahmens bilden, fest miteinander verbunden sind.

Eine weitere vorteilhafte Ausgestaltung der Erfindung ist darin zu sehen, dass an der Kopfseite eines eine Kurzseite des Rechteckrahmens bildenden Metallprofils, an dem ein um 90° nach innen in den Rechteckrahmen gerichtetes U-Profil vorhanden ist, an der Außenseite des Steges des Metallprofils ein Halbrundprofil angebracht ist.

Dadurch können auch Solarmodulhalterungen über ihre Kurzseiten mit geringer Überlappung dachziegelartig angeordnet und zusätzlich formschlüssig gehalten werden. Die Rechteckrahmen für die Solarmodulhalterungen sind ferner derartig ausgebildet, indem zumindest kopfseitig ein U-Profil an den Kastenhohlprofilen der Langseiten des Rechteckrahmens und ein U-Profil an der Kurzseite eines Metallprofils für den Rechteckrahmen nach innen aufeinander gerichtet sind. Damit gelingt es, dass ein Solarmodul einen kantenumgreifenden Halt erhält und über eine Kurzseite des Rechteckrahmens eingeschoben werden kann.

Die formschlüssige Aneinanderreihung von Solarmodulhalterungen überlappend übereinander und/oder nebeneinander ist möglich, indem über die vorhandenen Halbrundprofile an zumindest einer der Langseiten und der Kurzseiten des Rechteckrahmens ein formschlüssiger Verbund nebeneinander und kurz überlappend übereinander desselben herstellbar ist.

Entsprechende Abdeck- oder Verbindungselemente gewährleisten eine gegen Niederschlag dichte und mechanisch unverrückbare Anordnung der Solarmodulhalterungen.

Eine derartige unverrückbare Anordnung der Solarmodulhalterungen wird dadurch erreicht, in dem seitlich an den Langseiten gegeneinander anliegender Rechteckrahmen ein Abdeckelement eine definierte Distanz zwischen den Rechteckrahmen schafft und über seine nach unten geöffnete Profilierung in einer dreifach gestalteten U-Form einen Formschluss mit einem Halbrundprofil ermöglicht, wobei eine innere U-Form eine V-förmige Ausbildung beinhaltet, die eine Klemmverbindung mit dem Halbrundprofil eingeht.

Die Befestigung der einzelnen Solarmodulhalterungen am Dachgebälk wird über bereits angesprochene Profilierungen an den Fußseiten der Metallprofile für die Rechteckrahmen durchgeführt, indem die Rechteckrahmen über die an ihren Langseiten und dort an den jeweiligen Fußseiten der Metallprofile angebrachten, nach außen weisenden Winkelprofile mittels auflegbarer U-Befestigungsklemmen an Dachlatten o. ä. anbringbar sind.

Die Erfindung soll nachfolgend anhand eines Ausführungsbeispiels näher erläutert werden. Dazu wird auf die zeichnerischen Darstellungen gemäß der Figuren 1 bis 5 Bezug genommen.

Es zeigen:
- Figur 1: eine Übersichtsdarstellung mit angelegter Vorder- und Seitenansicht aus den Schnitten A-A und B-B gemäß Figur 2,
- Figur 2: wie Figur 1, jedoch mit Angabe der Lage von den gelegten Schnitten A-A, B-B und Angabe der Lage von Einzelheit "X", "Y" und "Z" weiterer Figuren 3 bis 5,
- Figur 3: Einzelheit "X",
- Figur 4: Einzelheit "Y" und
- Figur 5: Einzelheit "Z".

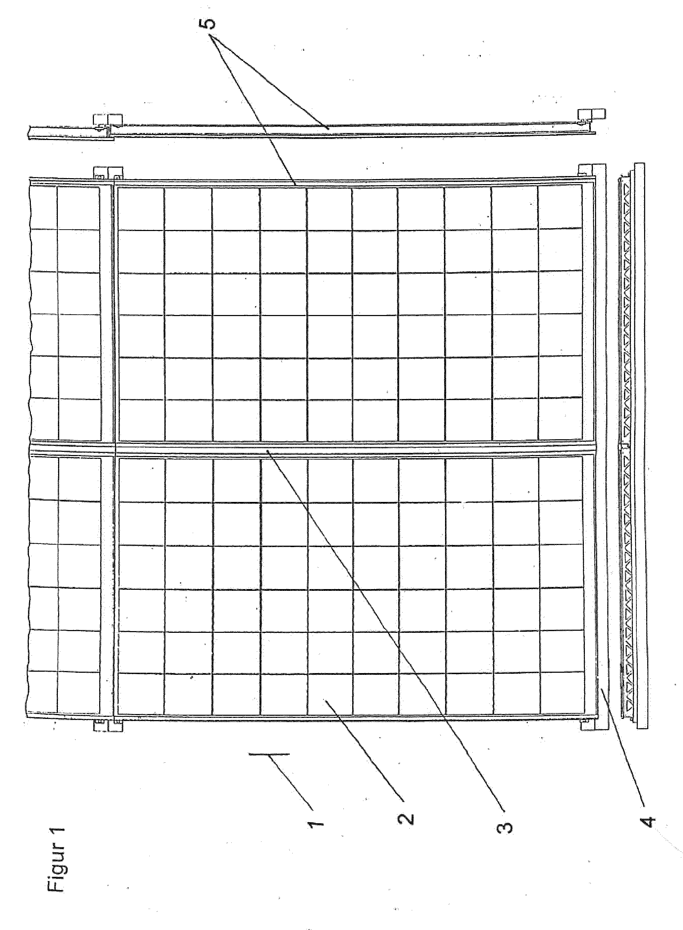

Figur 1 zeigt in Übersichtsform den Ausschnitt eines Feldes mehrerer Solarmodule 2, die jeweils auf die miteinander verbundenen Solarmodulhalterungen 1 aufgelegt sind.

Es ist zu sehen, dass zwischen den Langseiten aneinandergrenzender Solarmodule 2 ein Abdeckelement 3 angeordnet ist, welches dort form- und kraftschlüssig fixiert ist. Die Solarmodulhalterungen 1 liegen in Form von Rechteckrahmen 5 vor, die aus Metallprofilen für die Lang- und Kurzseiten bestehen, wobei die Metallprofile mittels Schraubverbindungen 14 fest zusammengefügt sind.

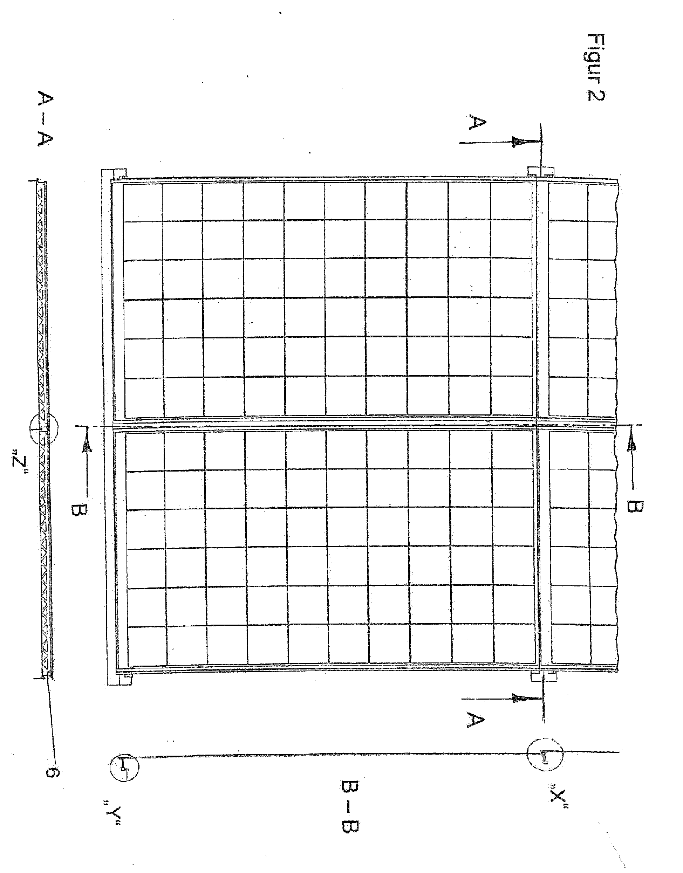

Figur 2 liegt analog wie die Ansicht nach Figur 1 vor, wobei jedoch dargestellt wird, wie die Vorder- und Seitenansicht aus den Schnitten A-A und B-B zu verstehen ist.

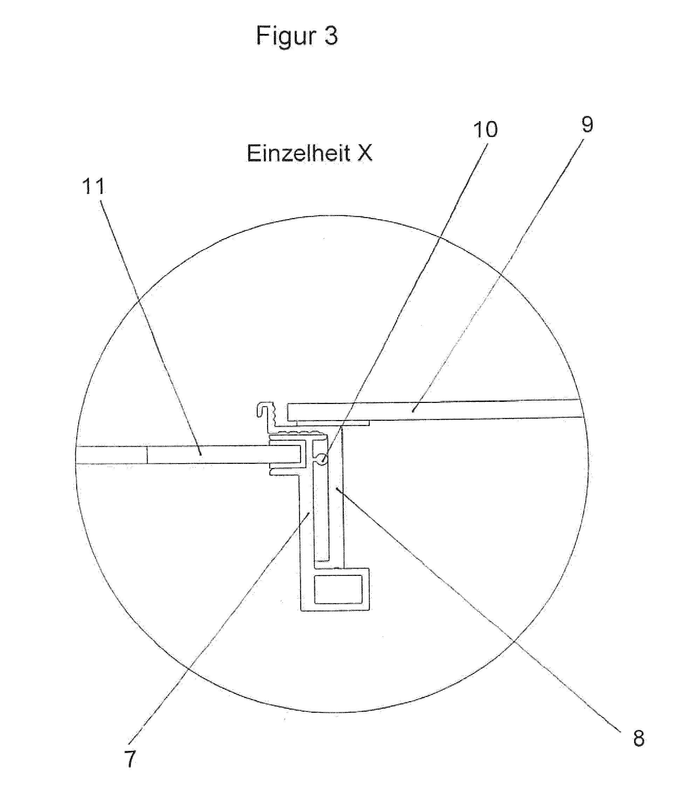

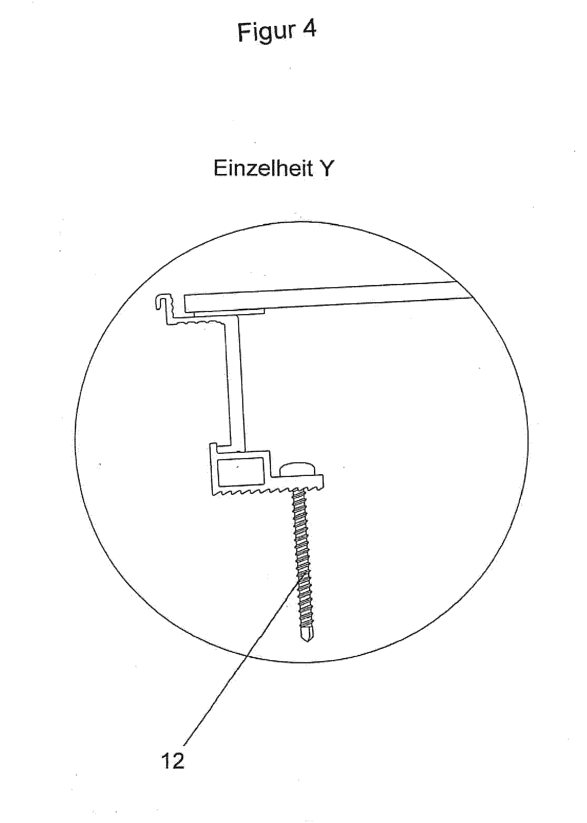

Eine detaillierte Darstellung an ausgewählten Stellen der vorgenannten Schnitte gemäß der Figuren 3 bis 5 erläutert sodann die prinzipielle Lage der Metallprofile 7, 8 (Figur 3), wobei hier auch die Überlappung von Solarmodulhalterungen 1 innerhalb eines Solarmodulfeldes gezeigt ist. Dann wird auf die Ausbildung eines Metallprofils am Rechteckrahmen 5 eingegangen, das am Beginn der Montage eines Solarmodulfeldes beispielsweise an der Kurzseite eines Rechteckrahmens 5 angebracht ist (Figur 4), wobei hier noch seine Befestigung mit der Dachlattung eines Dachstuhls über Holzschrauben 12 angedeutet wird.

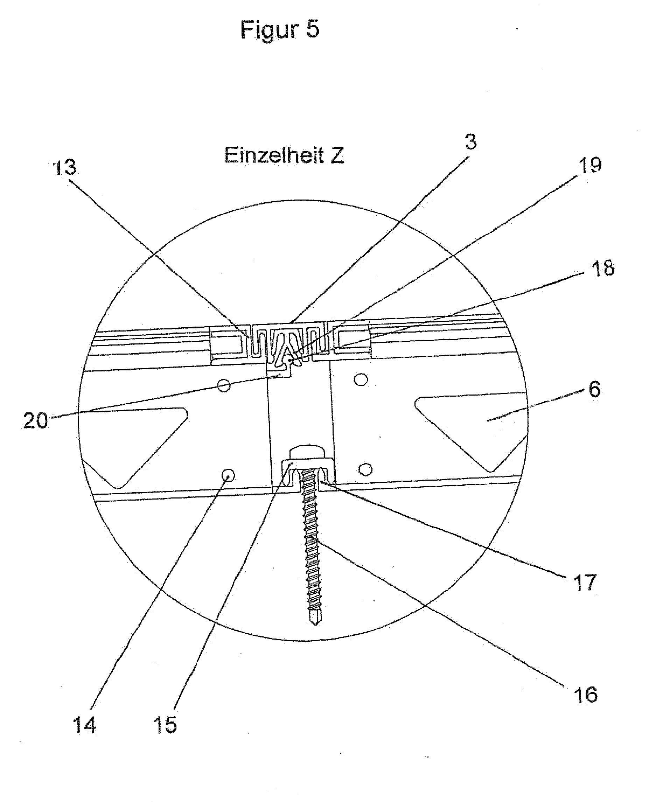

Schließlich zeigt Figur 5 die Verbindung zwischen den einzelnen Rechteckrahmen 5 der Solarmodulhalterungen 1 an den Langseiten der Rechteckrahmen 5 über ein diese verbindendes Abdeckelement 3.

Das Abdeckelement 3 besitzt an seiner Unterseite drei Profilierungen in Form eines U, wobei die äußeren, schmaleren in U-Profile der Metallprofile der Langseiten der Rechteckrahmen 5 eingreifen und die innere und breitere U-Profilierung mit einer zusätzlichen inneren V-förmigen Profilierung über eine Auskragung 20 mit einem an ihrem freien Ende angebrachten Halbrundprofil 18 einrastbar ist. Die V-förmige Profilierung wird durch mehrere einzeln einlegbare Kunststoffelemente in die innere und breitere U-Profilierung bewirkt.

Bevor das Abdeckelement 3 an den Langseiten zwischen den Rechteckrahmen 5 eingelegt wird, werden die Rechteckrahmen 5 über Befestigungsklemmen 15, die über Winkelprofile 17 geschoben werden, befestigt. Die Winkelprofile 17 befinden sich dabei an den Fußseiten der Metallprofile an den Langseiten der Rechteckrahmen 5 und sie zeigen aufeinander.

Figur 5 zeigt auch deutlich, dass die Metallprofile der Kurzseiten der Rechteckrahmen 5 für die Solarmodulhalterungen 1 Lüftungsöffnungen 6 aufweisen, über die insbesondere mittels einer Zwangslüftung Wärme aus dem Bereich unterhalb der Solarmodule 2, 9, 11 abführbar ist.

### Bezugszeichenliste

- 1: Solarmodulhalterung
- 2: Solarmodul
- 3: Abdeckelement
- 4: Abschlusselement
- 5: Rechteckrahmen
- 6: Lüftungsöffnung
- 7: Metallprofil Kurzseite mit Kastenhohlprofil
- 8: Metallprofil Kurzseite mit Einfach- und Doppelabwinkelung
- 9: Solarlaminat
- 10: Halbrundprofil
- 11: Solarlaminat
- 12: Holzschraube
- 13: Doppel-U-Profilierung
- 14: Schraubverbindung
- 15: Befestigungsklemme
- 16: Holzschraube
- 17: Winkelprofil
- 18: Halbrundprofil
- 19: Klemmverbindung
- 20: Auskragung

## Patentansprüche

1. Solarmodulhalterung (1) zur Montage von Solarmodulen (2, 9, 11) als Indachmodule, bestehend aus form- und kraftschlüssig miteinander verbundenen Metallprofilen, die, dem Rastermaß von Solarmodulen (2, 9, 11) folgend, festgefügte Rechteckrahmen (5) bilden, **gekennzeichnet dadurch, dass** die Rechteckrahmen (5) an ihrer jeweiligen Langseite aus einem Kastenhohlprofil mit mehreren Profilierungen in U-Form an ihrer Kopfseite und zumindest einer Profilierung in Winkelform an ihrer Fußseite und an ihrer jeweiligen Kurzseite aus einem Metallprofil bestehen, das an seiner Fußseite entweder ein Kastenhohlprofil oder ein nach außen gerichtetes Winkelprofil und an seiner Kopfseite eine Profilierung entweder in U-Form oder in doppelt abgewinkelter L-Form aufweist.

2. Solarmodulhalterung (1) nach Anspruch 1, **gekennzeichnet dadurch, dass** mindestens ein Kastenhohlprofil, das sich an der Langseite eines Rechteckrahmens (5) befindet und, dort an dessen Kopfseite, eine nach außen gerichtete Auskragung (20) in Winkelform aufweist, wobei auf einem vertikal nach oben gerichteten Steg der Auskragung (20) ein Halbrundprofil (18) angebracht ist.

3. Solarmodulhalterung (1) nach Anspruch 1 oder 2, **gekennzeichnet dadurch, dass** die Kastenhohlprofile für die Langseiten des Rechteckrahmens (5) an ihrer Kopfseite zwei unterschiedlich breite und hohe Profilierungen in Doppel-U-Profilierung (13) , die um 90° versetzt zueinander angeordnet sind, aufweisen.

4. Solarmodulhalterung (1) nach einem der vorhergehenden Ansprüche, **gekennzeichnet dadurch, dass** die Metallprofile für einen Rechteckrahmen (5) über versenkbare Schraubverbindungen (14) in der Nähe der Enden der Metallprofile, die die Kurzseiten des Rechteckrahmens (5) bilden, fest miteinander verbunden sind.

5. Solarmodulhalterung (1) nach einem der vorhergehenden Ansprüche, **gekennzeichnet dadurch, dass** an der Kopfseite eines eine Kurzseite des Rechteckrahmens (5) bildenden Metallprofils (7), an dem ein um 90° nach innen in den Rechteckrahmen (5) gerichtetes U-Profil vorhanden ist, an der Außenseite des Steges des Metallprofils (7) ein Halbrundprofil (10) angebracht ist.

6. Solarmodulhalterung (1) nach Anspruch 1, **gekennzeichnet dadurch, dass** zumindest kopfseitig ein U-Profil an den Kastenhohlprofilen der Langseiten des Rechteckrahmens (5) und ein U-Profil an der Kurzseite eines Metallprofils für den Rechteckrahmen (5) nach innen aufeinander gerichtet sind.

7. Solarmodulhalterung (1) nach einem der vorhergehenden Ansprüche, **gekennzeichnet dadurch, dass** über die vorhandenen Halbrundprofile (10,18) an zumindest einer der Langseiten und der Kurzseiten des Rechteckrahmens (5) ein formschlüssiger Verbund nebeneinander und kurz überlappend übereinander von Solarmodulhalterungen (1) herstellbar ist.

8. Solarmodulhalterung (1) nach Anspruch 7, **gekennzeichnet dadurch, dass** seitlich an den Langseiten gegeneinander anliegender Rechteckrahmen (5) ein Abdeckelement (3) eine definierte Distanz zwischen den Rechteckrahmen (5) bewirkt und über seine nach unten geöffnete Profilierung in einer dreifach gestalteten U-Form einen Formschluss mit einem Halbrundprofil (18) ermöglicht, wobei eine innere U-Form eine V-förmige Ausbildung beinhaltet, die eine Klemmverbindung (19) mit dem Halbrundprofil (18) eingeht.

9. Solarmodulhalterung (1) nach Anspruch 1 bis 8, **gekennzeichnet dadurch, dass** die Rechteckrahmen (5) über die an ihren Langseiten und dort an den jeweiligen Fußseiten der Metallprofile angebrachten, nach außen weisenden Winkelprofilen (17) mittels auflegbarer Befestigungsklemmen (15) an Dachlatten o. ä. anbringbar sind.
